# EUROPEAN PATENT APPLICATION

(11) **EP 4 478 011 A1**
(43) Date of publication of application: **18.12.2024**
(21) Application number: 23179043.7
(22) Date of filing: 13.06.2023
(51) Int. Cl.: G01G 21/28, G01G 23/48

(54) **DRAFT SHIELD FOR A BALANCE**

(71) Applicant: Mettler-Toledo GmbH, 8606 Greifensee (CH)
(72) Inventor: Bühler, Stefan, Uster (CH); Meister, Beat, Nänikon (CH); Buchmann, Alice, Hinwil (CH); Ehrbar, Sandra, Hittnau (CH)
(74) Representative: Mettler-Toledo

(57) **Abstract**

A draft shield (3) for a balance (2) comprises a housing having a top side, a bottom side and a back side. The draft shield (3) further comprises a heat transmission member (37), the heat transmission member comprising at least a first plate-shaped section (371) extending along and adjacent to the bottom side of the housing. The draft shield further comprising a heat dissipator (41) arranged outside the housing and a means (51) for driving a heat flux from a member having a relatively lower temperature to a member having a relatively higher temperature in functional relationship with the heat transmission member (37) and the heat dissipator (41). The means for driving a heat flux from a member having a relatively lower temperature to a member having a relatively higher temperature may be a thermoelectric module and in particular be a Peltier module.

## Description

### Technical Field

The herein disclosed subject matter relates to draft shields for balances and weighing systems comprising a draft shield of the herein suggested type. More in particular, the herein claimed invention relates to the subject matter set forth in the claims.

### Background Art

Draft shields are common in precision weight measurements. They serve to protect the weighing pan and weighing goods from external influences, such as, for instance, agitated air, which could in turn induce forces acting on the weighing pan and weighing good and thus detrimentally influence the measurement precision. It will be readily appreciated that agitated air influences the measurement, or weight determination, the stronger the finer the resolution of the weight measurement is, i.e., the more accurate the weight determination is intended to be..

Heat intake from the balance electronics may induce convection flows inside the draft shield, or the weighing chamber provided inside the draft shield, respectively. This is in particular true when applying so-called top loader balances, in which the load cell, i.e., the transducer transforming the weight of a weighing good into an electric signal, and related electronic components are provided below the weighing pan and consequently below the weighing chamber. Heat from the weighing cell and/or related electronics heat the air at the bottom of the weighing chamber, thus resulting in unstable air stratification inside the weighing chamber and inducing convective flows inside the weighing chamber. The thus generated convection flows may significantly influence the measurements when measurements are performed with a sub-milligram resolution, such as, e.g., a resolution of about 10 *µ* g or less.

Various approaches have been taken in the art to avoid unstable air stratification inside weighing chambers and/or to even out temperature differences inside weighing chambers, in particular vertical temperature differences. According to EP 1 396 711, one vertical wall of a weighing chamber is provided by a wall fixedly attached to the balance. A thermoelectric module a in thermal connection with said wall and provided such as to generate a temperature distribution of the wall in which the temperature of the wall increases from a bottom end to a top end.

DE 10 2009 055 622 suggests a weighing system including a weighing chamber. A cover of the balance forms the bottom of the weighing chamber. Said cover is thermally conductive connected to a thermoelectric module. The thermoelectric module is operated to cool the cover, thus generating a stable air stratification inside the weighing chamber, with cooled air provided at the bottom.

### Summary of invention

It is an object of the present disclosure to provide a draft shield and weighing system of the type initially mentioned. In more specific aspects, the disclosed subject matter shall result in a weighing chamber having one of a stable temperature stratification and a at least essentially evened-out temperature inside the weighing chamber. In other aspects, the disclosed subject matter shall achieve a temperature inside the weighing chamber which at least essentially equals the ambient temperature outside the draft shield. This may yield the advantage that transferring a weighing good from outside inside the weighing chamber has as little influence on the temperature and/or temperature distribution inside the weighing chamber as possible, be it through transferring the weighing good at essentially ambient temperature into the weighing chamber or the ambient air entering the weighing chamber when a door of the draft shield is opened. It goes without saying, that the subject matter herein suggested shall further be as simple as possible, easy to handle, and reliable.

In still another aspect, a modular approach is followed, wherein it is desired to use the beneficial properties of one single device in connection with a multitude of balances.

This is achieved by the subject matter described in claim 1.

Further effects and advantages of the disclosed subject matter, whether explicitly mentioned or not, will become apparent in view of the disclosure provided below.
(1) Accordingly, disclosed is a draft shield for a balance comprising a housing having a top side, a bottom side and a back side. The draft shield further comprising a heat transmission member. The heat transmission member may be arranged inside the housing. The heat transmission member comprises at least a first plate-shaped section extending adjacent to and along the bottom side of the housing. It may be said that the first plate-shaped section of the heat transmission member extends parallel to the bottom side of the housing. In particular, the first plate-shaped section may extend horizontally. The draft shield further comprises a heat dissipator arranged outside the housing, and a means for driving a heat flux from a member having a relatively lower temperature to a member having a relatively higher temperature in functional relationship with the heat transmission member and the heat dissipator. The functional relationship involves a thermally conductive connection. The means for driving a heat flux from a member having a relatively lower temperature to a member having a relatively higher temperature is thus configured to drive a heat flux between the heat transmission member and the heat dissipator. The means for driving a heat flux from a member having a relatively lower temperature to a member having a relatively higher temperature is in particular placed between the heat transmission member and the heat dissipator. In particular, a first surface of the means for driving a heat flux from a member having a relatively lower temperature to a member having a relatively higher temperature may be mounted in contact with the heat transmission member, and/or a second surface of the means for driving a heat flux from a member having a relatively lower temperature to a member having a relatively higher temperature may be mounted in contact with the heat dissipator. In embodiments, a distance body comprising or consisting of a material having a high thermal conductivity of 10 W/(m·K) or more, 20 W/(m·K) or more, 50 W/(m·K), 100 W/(m·K) or more, or 200 W/(m·K) or more may be placed between the means for driving a heat flux from a member having a relatively lower temperature to a member having a relatively higher temperature and the heat transmission member and/or the heat dissipator. This might be useful for adapting geometry and/or dimension, and further to increase the distance between the heat transmission member and the heat dissipator, thus reducing the radiative heat transfer between the heat transmission member and the heat dissipator. The means for driving a heat flux from a member having a relatively lower temperature to a member having a relatively higher temperature may in particular be configured to drive a heat flux from the heat transmission member to the heat dissipator outside the housing. The heat dissipator may in instances extend along the back side of the draft shield housing.

"Along", in this context, shall not be construed as implying contact or close proximity between two members, but shall be construed as denoting that both members extend, at least essentially, in at least one common direction. In another aspect, it may be understood as two surfaces of the members facing each other.

Embodiments are conceivable in which the first plate-shaped section of the heat transmission member is the entire heat transmission member.

At least the first plate-shaped section of the heat transmission member, and in particular the heat transmission member in its entirety, may comprise, or consist of, a material having a high thermal conductivity. A high thermal conductivity shall be understood as a thermal conductivity of 10 W/(m·K) or more, 20 W/(m·K) or more, 50 W/(m·K), 100 W/(m·K) or more, or 200 W/(m·K) or more. All values concerning thermal conductivity given in this document refer to values at 20° C.

The first plate-shaped section of the heat transmission member serves to collect and absorb heat intake from the weighing cell and related electronics of the balance which are placed below the weighing chamber. By means of the means for driving a heat flux from a member having a relatively lower temperature to a member having a relatively higher temperature the first plate-shaped section of the heat transmission member may be actively cooled, and heat brought into the interior of the draft shield, or the weighing chamber, respectively, from electronics of the balance located below the draft shield may be transferred to the heat dissipator and be dissipated to ambient air from there. The first plate-shaped section of the heat transmission member may thus be cooled to a temperature about or below the temperature outside the draft shield so as to drive a heat flux from the interior of the draft shield via the first plate-shaped section of the heat transmission member to the heat dissipator. As a consequence, air of a relatively low temperature is present around the first plate-shaped section of the heat transmission member, i.e., at the bottom of the interior of the draft shield, resulting in a stable stratification of air inside the draft shield, or weighing chamber, respectively, and thus avoiding convection flows inside the draft shield or weighing chamber.

In a further aspect, due to the fact that the heat transmission member, the heat dissipator and the means for driving a heat flux from a member having a relatively lower temperature to a member having a relatively higher temperature are all included in the draft shield, the herein disclosed subject matter follows a modular approach as one draft shield may be attached to and used in conjunction with multiple balances such that it is not necessary to equip each of the balances with a heat transmission member, a heat dissipator and a means for driving a heat flux from a member having a relatively lower temperature to a member having a relatively higher temperature. Any balance to which a draft shiels fits can benefit from the advantages of the herein disclosed subject matter.

It will be appreciated that in the context of a balance the spatial directions "top" and "bottom", as well as any related terms like, for instance "above" or "below", are clearly defined and are readily recognized by a skilled person by the intended use of the balance. The same holds true with respect to the draft shield which is intended to be attached to a balance in a well-defined specific and unique orientation. Also, directions or orientations like "front", "back" and "side" and terms related thereto are clearly defined and recognized by a skilled person. For instance, an operator control panel might define the front side of a balance.

It is noted that within the framework of the present disclosure the use of the indefinite article "a" or "an" does in no way stipulate a singularity nor does it exclude the presence of a multitude of the named member or feature. It is thus to be read in the sense of "at least one" or "one or a multitude of".

It is moreover noted that in the context of the present application the terms "bordering" and "adjacent" as well as "bordering" and "adjacent to" are considered as synonyms. "Adjacent" or "adjacent to" shall not be construed to imply that two elements or members necessarily touch each other or are contiguous with each other but shall be construed in the sense of "nearby" or "in close proximity".

In embodiments, the heat transmission member may comprise a second plate-shaped section extending from the first plate-shaped section of the heat transmission member extending along and adjacent to the back side of the draft shield. The second plate-shaped section of the heat transmission member may in particular extend vertically. The second plate-shaped section of the heat transmission member may extend from the first plate-shaped section of the heat transmission member and extend at least essentially perpendicular to the first plate-shaped section of the heat transmission member. The second plate-shaped section of the heat transmission member may extend from a back edge of the first plate-shaped section of the heat transmission member or proximate a back edge of the first plate-shaped section of the heat transmission member. In more particular embodiments, the heat transmission member may be a bent, L-shaped sheet of a material having a high thermal conductivity as defined above. The heat transmission member, comprising the first and second plate-shaped sections, may in embodiments be a seamless one-piece monobloc member. The second plate-shaped section of the heat transmission member may serve to conductively distribute heat between bottom and top of the draft shield, or a weighing chamber formed inside the draft shield, respectively, and thus assist in evening out the temperature distribution inside the draft shield, or weighing chamber, respectively. While in embodiments the means for driving a heat flux from a member having a relatively lower temperature to a member having a relatively higher temperature may directly or indirectly - the latter indicating a member comprising or consisting of a material having a high thermal conductivity as defined above being interposed - be mounted to the first plate-shaped section of the heat transmission member, it may in other embodiments directly or indirectly be mounted to the second plate-shaped section of the heat transmission member. In the latter embodiment, the heat collected by the first plate-shaped section of the heat transmission member is transferred to the second plate-shaped section of the heat transmission member from where it may be transmitted to the heat dissipator by the means for driving a heat flux from a member having a relatively lower temperature to a member having a relatively higher temperature. The heat dissipator may extend along the second plate-shaped section of the heat transmission member and more specifically may extend parallel to the second plate-shaped section of the heat transmission member.

In certain embodiments, the housing of the draft shield may comprise a back wall. In said embodiments, the second plate-shaped section of the heat transmission member may extend along an inner side of the back wall and the heat dissipator may extend along the outer side of the back wall. In other embodiments, however, a specific back wall of the housing of the draft shield may be omitted and the second plate-shaped section of the heat transmission member may serve as a back wall of the draft shield, or the housing of the draft shield, respectively, whereby one surface of the second plate-shaped section of the heat transmission member is located inside the housing and the other surface of the second plate-shaped section of the heat transmission member is located outside the housing.

In aspects, the first plate-shaped section of the heat transmission member may comprise at least one through opening. Said at least one through opening may be configured to receive a suspension member for functionally connecting a weighing pan placed above the first plate-shaped section of the heat transmission member to a weighing cell of a balance placed below the first plate-shaped section of the heat transmission member.

The means for driving a heat flux from a member having a relatively lower temperature to a member having a relatively higher temperature may be a thermoelectric module, in particular a Peltier module. Said kind of modules are readily available off shelf, comparatively inexpensive, and include no moving parts, which avoids vibrations, reduces maintenance requirements, and results in superior reliability.

The heat dissipator may comprise a plurality of ribs, i.e., at least two ribs. The plurality of ribs may comprise, or is, a plurality of vertically extending ribs. Such ribs may particularly well dissipate heat through free convection flows along the ribs, without the need to use a fan or other means for agitating air around the ribs to boost heat transfer from the ribs to ambient air.

In embodiments, the draft shield is a separate device and in particular is separate from a balance. The draft shield may further be adapted and configured to be selectively attached to and detached from a balance. To this extent, the draft shield may comprise at least one electric contact member which is accessible from outside. In particular, said at least one electric contact member may be arranged at and/or may be accessible from, or at, respectively, the bottom of the draft shield. The at least one electric contact member may be adapted and configured to make contact with at least one counterpart electric contact member provided at or by a balance. In more specific aspects, the at least one electric contact member may be adapted and configured to be selectively connected to and disconnected from an electric counterpart member. Said counterpart member is in particular provided at a balance for which the draft shield is intended and configured to be used, i.e., to be selectively attached to and detached and removed from, wherein said selective connection and disconnection, respectively, is effected by attaching the draft shield to said balance and detaching and removing the draft shield from said balance. This, in turn, may in embodiments be effected in moving the draft shield in a top-bottom or bottom-top direction, respectively, which may involve a vertical movement of the draft shield relative to said balance.

At least one of the at least one electric contact member may be functionally connected, which may in particular include an electric connection, to electric terminals of the means for driving a heat flux from a member having a relatively lower temperature to a member having a relatively higher temperature. A functional connection includes embodiments in which an electronic circuit connect in between an electric contact member and the means for driving a heat flux from a member having a relatively lower temperature to a member having a relatively higher temperature. Thus, the at least one of the at least one electric contact member may be configured to provide power to the means for driving a heat flux from a member having a relatively lower temperature to a member having a relatively higher temperature.

At least one temperature sensor may be provided inside the housing of the draft shield. In addition, the draft shield may comprise a temperature control circuit in functional connection with at least one of the at least one temperature sensor and the means for driving a heat flux from a member having a relatively lower temperature to a member having a relatively higher temperature. Thus, the temperature inside the housing of the draft shield may be controlled. In other embodiments, however, a temperature sensor and/or temperature control circuit may be omitted, which considerably saves cost, while the temperature inside the housing of the draft shield is uncontrolled or open loop controlled. However, for many applications uncontrolled or open loop controlled cooling of the interior of the housing of the draft shield may be sufficient.

It might be the case that a temperature sensor is provided and is connected to at least one of the at least one electric contact member of the draft shield outlined above. A temperature control circuit may then for instance be provided in the balance for which the draft shield is intended to be used with.

In other aspects, a weighing system comprising a balance and a draft shield of any type described above is disclosed. The draft shield is separate from the balance and is adapted and configured to be selectively attached to and detached and removed from the balance. When the draft shield is attached to the balance, the draft shield encloses a weighing chamber including a weighing pan of the balance. In exemplary aspects, the draft shield may comprise at least one electric contact member, in any manner outlined above. The balance may comprise an electric connection terminal which is adapted and configured to make electric contact with at least one of the at least one electric contact member of the draft shield. The electric connection terminal may further be adapted and configured for providing power supply for the means for driving a heat flux from a member having a relatively lower temperature to a member having a relatively higher temperature, and/or for transferring at least one measurement signal and/or at least one control signal between the balance and the draft shield. It is understood that the at least one electric contact member of the draft shield and the electric connection terminal of the balance are, in these embodiments, adapted and configured to autonomously make electric contact with each other when attaching the draft shield to the balance, and, vice versa, autonomously disconnect from each other when detaching the draft shield from the balance.

It is understood that the features and embodiments disclosed above may be combined with each other. It will further be appreciated that further embodiments are conceivable within the scope of the present disclosure and the claimed subject matter which are obvious and apparent to the skilled person by virtue of the present disclosure.

### Brief description of drawings

The subject matter of the present disclosure is now to be explained in more detail by means of selected exemplary embodiments shown in the accompanying drawings. The figures show
- Fig. 1: a first perspective view of a weighing system comprising a balance and a draft shield of the type herein disclosed;
- Fig. 2: a second perspective view of a weighing system comprising a balance and a draft shield of the type herein disclosed;
- Fig. 3: a view of a first exemplary embodiment of the heat transmission member and the heat dissipator with a thermoelectric module interposed;
- Fig. 4: a perspective view of the view of an exemplary embodiment of the heat transmission member;
- Fig. 5: a view of a second exemplary embodiment of the heat transmission member and the heat dissipator with a thermoelectric module functionally interposed; and
- Fig. 6: a detail view showing an embodiment of electric connection members.

It is understood that the drawings may, at least in part, be highly schematic, and details not required for instruction purposes may have been omitted for the ease of understanding and depiction. It is further understood that the drawings show only selected, illustrative embodiments, and embodiments not shown may still be well within the scope of the herein disclosed and/or claimed subject matter.

### Description of embodiments

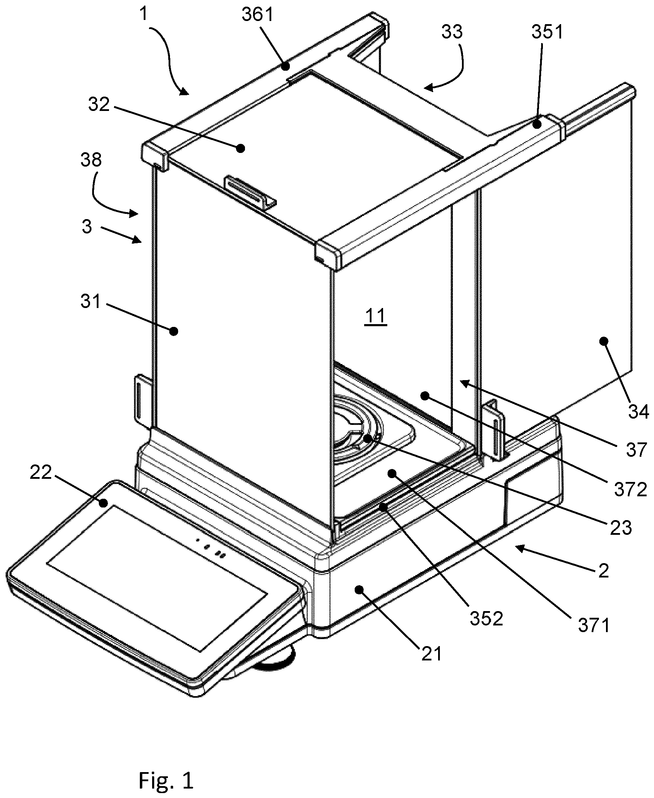

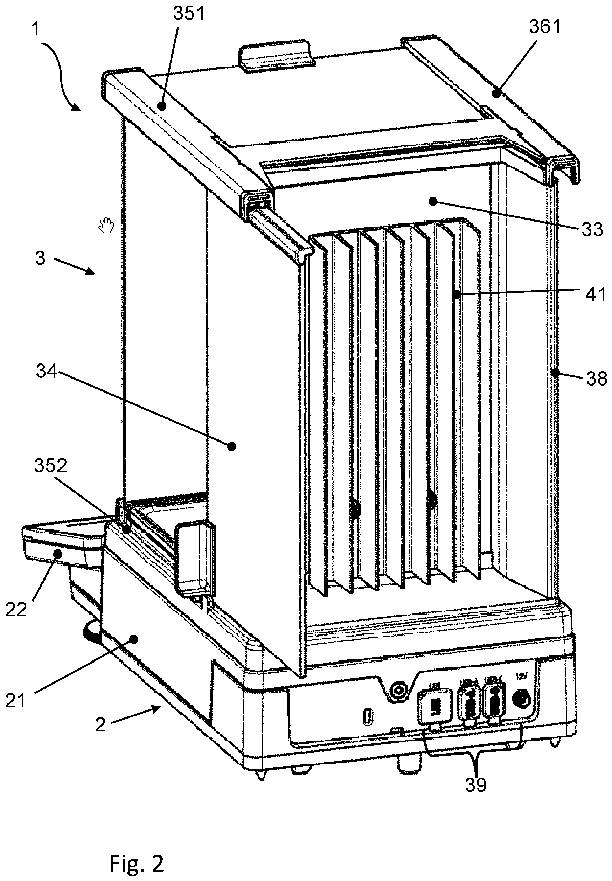

Figure 1 shows an exemplary embodiment of a weighing system 1 comprising a balance 2 and an exemplary embodiment of a draft shield 3 of the type herein suggested. Balance 2 comprises a housing 21 in which, for instance, a load cell and electronics are contained. Further, balance 2 comprises a display and operator control panel 22. The load cell is the transducer which transforms a mechanical input from a weighing good placed on weighing pan 23 into an electric signal. Weighing chamber 11 is defined within a housing of draft shield 3, together with an upper surface of housing 21 of balance 2, and contains weighing pan 23. It is understood to this extent that draft shield 3 is a separate member and may be selectively attached to balance 2, so as to enclose, together with an upper surface of housing 21 of balance 2, weighing chamber, and detached and removed from balance 2. With draft shield 3 attached to balance 2, as shown in figure 1, and when draft shield 3 is closed, weighing pan 23 and a weighing good placed on weighing pan 23 are contained within weighing chamber 11 and protected from external influences like agitated air, which otherwise could induce movement of weighing pan 23 with the weighing good placed thereupon and thus detrimentally effect precision of weight measurements. The housing of draft shield 3, in the shown exemplary embodiment, comprises front wall 31, top wall 32, back wall 33, and side doors 34 and 38. Side door 38 is positioned on an opposite side from side door 34 and is not visible in the present depiction. Side door 34 is slidably guided in upper guideway 351 and lower guideway 352. The skilled person will readily appreciate how side door 38, although not visible in detail, is guided in upper guideway 361 and a lower guideway which is not visible in the present depiction. Doors 34 and 38 are provided to selectively close draft shield 3, and thus encase weighing chamber 11 inside the housing of draft shield 3, and open draft shield 3 to provide access to weighing chamber 11. In the present depiction, door 34 is open to allow a view into the interior of weighing chamber 11. Inside weighing chamber 11 heat transmission member 37 is provided. Heat transmission member 37 comprises a first plate-shaped section 371 extending along a bottom side of draft shield 3, or weighing chamber 11, respectively, and a second plate-shaped section 372 extending along and adjacent to an inner side of back wall 33. As mentioned above, in other embodiments a specific back wall of the housing of draft shield 3 may be omitted and second plate-shaped section 372 of heat transmission member 37 thus may also be a back wall of draft shield 3. First plate-shaped section 371 of heat transmission member 37 extends adjacent to the bottom side of draft shield 3, or adjacent to the bottom of weighing chamber 11, respectively, and further extends at least essentially horizontally. Second plate-shaped section 372 extends perpendicular to first plate-shaped section 371, and it may essentially be stated that second plate-shaped section 372 is vertically arranged. Heat transmission member 37 may generally be an L-shaped, bent sheet of a material having a high thermal conductivity and including first plate-shaped section 371 and second plate-shaped section 372 as the two legs of the L-shaped geometry. As noted above, a material having a high thermal conductivity may be a material having a thermal conductivity of 10 W/(m·K) or more, 20 W/(m·K) or more, 50 W/(m·K), 100 W/(m. K) or more, or 200 W/(m·K) or more. In embodiments, the heat transmission member of the present disclosure may be made of aluminum. With reference to figure 2, it is illustrated that a heat dissipator 41 is arranged outside the housing of draft shield 3 and extends along an outer side of back wall 33. Further, power supply and signal transmission terminals 39 are provided on the back of balance 2.

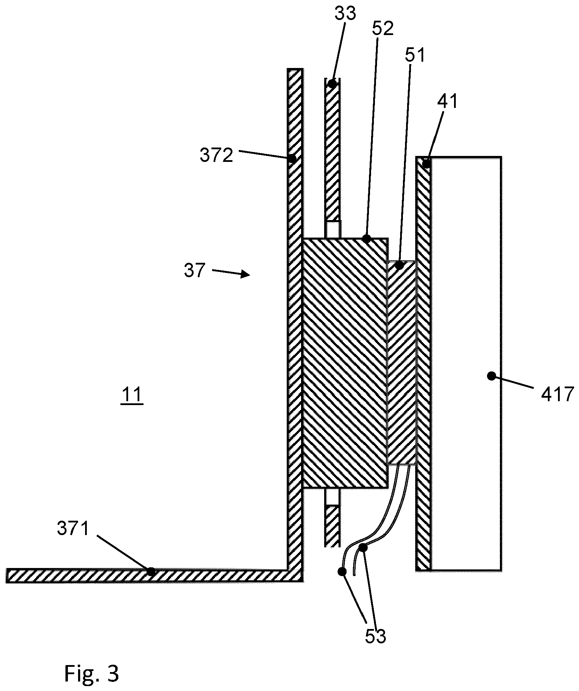

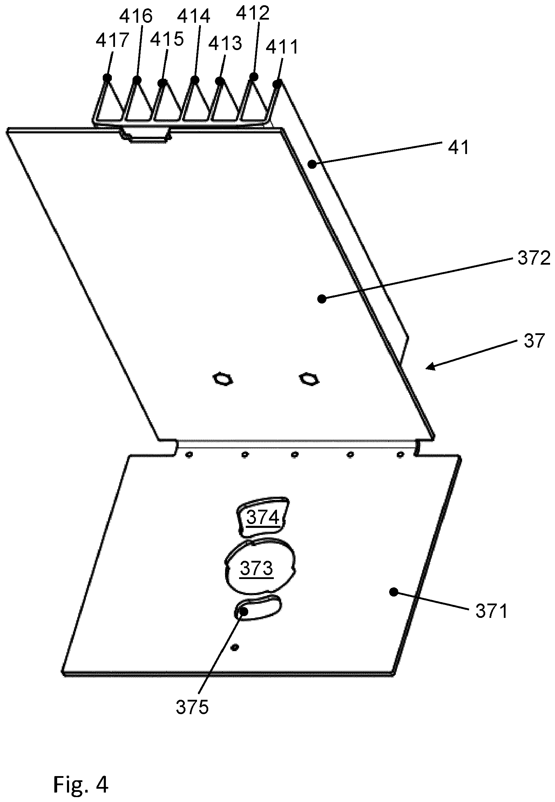

Figure 3 outlined above. The section is taken in a plane extending from bottom to top and from front to back of draft shield 3. A thermoelectric module 51, for instance a Peltier module, is provided in functional connection, i.e., provided in a thermally conductive relationship, with second plate-shaped section 372 of heat transmission member 37 and heat dissipater 41. A distance body 52 having a high thermal conductivity of 10 W/(m·K) or more, 20 W/(m·K) or more, 50 W/(m·K), 100 W/(m·K) or more, or 200 W/(m·K) or more is in the exemplary embodiment arranged between second plate-shaped section 372 of heat transmission member 37 and heat dissipator 41. Lead wires 53 are configured to supply power to thermoelectric module 51. Thermoelectric module 51 is provided as a means for driving a heat flux from a member having a relatively lower temperature to a member having a relatively higher temperature and is, through the arrangement in thermally conductive relationship with both the second plate-shaped section 372 of heat transmission member 37 and heat dissipater 41, to drive a flux of heat between second plate-shaped section 372 of heat transmission member 37 and heat dissipater 41. Thermoelectric module 51 may in particular be configured to drive a heat flux from second plate-shaped section 372 of heat transmission member 37 to heat dissipater 41. Thus, second plate-shaped section 372 of heat transmission member 37 may be cooled to a temperature below the temperature of heat dissipator 41. At least one side of second plate-shaped section 372 of heat transmission member 37 is provided inside draft shield 3. In the present exemplary embodiment, second plate-shaped section 372 of heat transmission member 37 is entirely provided inside draft shield 3. Heat dissipator 41 is provided the outside the housing, i.e., in the ambient air. The lowest temperature which heat dissipator 41 may thus reach is the temperature of the ambient air when thermoelectric module 51 is switched off. If thermoelectric module 51 is operated to drive a heat flux from second plate-shaped section 372 of heat transmission member 37 to heat dissipator 41, the temperature of heat dissipator 41 will be above that of the ambient air. Heat dissipator 41 comprises vertically extending rib 417, and further vertically extending ribs, as will become apparent by virtue of figure 4 below, and is an exemplary embodiment of heat dissipators yielding enhanced heat dissipation the skilled person is perfectly familiar with. Dependent on the power at which thermoelectric module 51 is operated, second plate-shaped section 372 of heat transmission member 37 may thus be cooled to a temperature at least approximately equal to or lower than the temperature of ambient air.

By virtue of figure 3 in connection with figure 1 it is apparent that electronics inside housing 21 of balance 2 may heat a lower part of weighing chamber 11 provided inside the housing of draft shield 3. The heat thus transferred into weighing chamber 11 is, at least in part, collected or absorbed by first plate-shaped section 371 of heat transmission member 37 and conductively transferred to second plate-shaped section 372 of heat transmission member 37, from where it is transferred to heat dissipator 41 and dissipated into the ambient air. Hence, heat transmission member 37, in functional connection with thermoelectric module 51 and heat dissipator 41, serves to collect, distribute and dissipate heat brought into weighing chamber 11 form electronics inside housing 21 of balance 2 into the ambient air. Owing to the hight thermal conductivity of heat transmission member 37 the temperature gradient required to drive the associated heat flux through heat transmission member 37 is relatively low. Vertical second plate-shaped section 372 of heat transmission member 37 may support conductively distributing the heat inside the housing of draft shield 3 in the vertical direction without involving convective flows inside weighing chamber 11. Rather, in that heat transmission member 37 is actively cooled, the temperature of first plate-shaped section 371 of heat transmission member 37 may be cooled below a mean temperature inside weighing chamber 11 and thus achieve a stable air stratification inside weighing chamber 11, with relatively colder air at the bottom and relatively warmer air on the top. In embodiments, at least one temperature sensor may be provided inside weighing chamber 11, and the cooling power of thermoelectric module 51 be controlled through a temperature control circuit to control the temperature inside weighing chamber 11 to a target value, as, for instance, the ambient temperature. Said temperature control is effected, as will be appreciated, by controlling the electric power provided to thermoelectric module 51. In other embodiments, however, thermoelectric module 51 may be operated in an open loop control and temperature sensors and a temperature control circuit may be omitted for the sake of simplicity and cost savings. A temperature control circuit, if present, may be comprised in draft shield 3 as well as in balance 2. The power supplied to thermoelectric module 51 may be chosen and adapted to the heat intake form the electronics inside housing 21 of balance 2 to achieve, at least in a good approximation, a certain target temperature inside weighing chamber 11, such as, for instance, ambient temperature.

With reference to figure 4, heat dissipator 41 comprises a plurality of vertically extending ribs 411, 412, 413, 414, 415, 416 and 417. As the skilled person is familiar with, vertically extending ribs 411, 412, 413, 414, 415, 416 and 417 add to the heat dissipating surface of heat dissipator 41, while allowing unhindered natural convection flows along ribs 411, 412, 413, 414, 415, 416 and 417, which significantly increases dissipation of heat by heat dissipator 41. It is further seen that first plate-shaped section 371 of heat transmission member 37 has through openings 373, 374 and 375, which allow members of balance 2, such as a support for the weighing pan which functionally connects the weighing pan, which is provided above first plate-shaped section 371 of heat transmission member 37, to the weighing cell of the balance which is provided below first plate-shaped section 371 of heat transmission member 37.

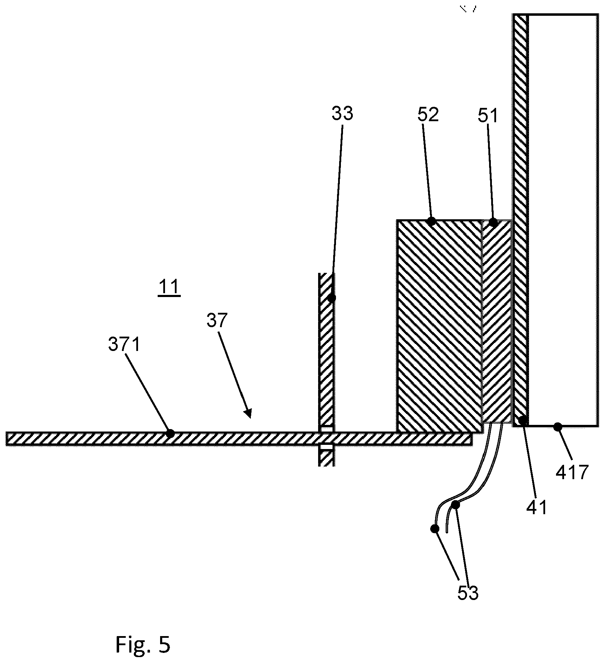

Figure 5 shows a schematic sectional view of a part of draft shield 3 according to a second exemplary embodiment. First plate-shaped section 371 of heat transmission member 37 extends from inside weighing chamber 11, or inside the draft shield, through back wall 33 of the draft shield. Heat transmission member 37 comprises only first plate-shaped section 371 and no second plate-shaped section. On the outside of the draft shield, a distance member 52 comprising or consisting of a material having a high thermal conductivity as defined above is mounted to the part of first plate-shaped section 371 which protrudes through back wall 33 to the outside of the weighing chamber. Thermoelectric module 51 is mounted to distance member 52 with a first surface of thermoelectric module 51 making large-area contact distance member 52, and heat dissipator 41 is in turn mounted and makes large-area contact to a second, opposite face of distance member 52. Heat dissipator 41 may be the same type as in the embodiment outlined above, and, analogous to the embodiment outlined above, is arranged such that the ribs, of which rib 417 is visible in the present depiction, extend vertically.

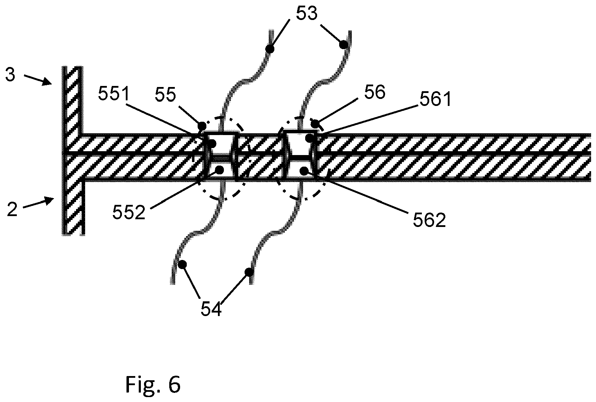

As illustrated in figure 6, power lead wires 53 of thermoelectric module 51 are connected to first electric contact members 551 and 561 of pairs 55, 56 of matching associated electric contact members 551, 552 and 561, 562, respectively. First electric contact members 551, 561 are electric contact members of draft shield 3, while second electric contact members 552 and 562 are contact members of balance 2. Second electric contact members 552 and 562 jointly form a terminal which is adapted and configured to make electric contact with first electric contact members 551 and 561 of draft shield 3. Second electric contact members 552 and 562 are connected to lead wires 54, which in turn may connect a power supply device of balance 2 to second electric contact members 552 and 562, and thus, through pairs 55 and 56 of associated electric contact members and lead wires 53, provide electric power to the thermoelectric module. It is understood that, generally further pairs of associated electric contact members may be provided for the transfer of measurement data, control signals, and other electric signals which may need to be transferred between balance 2 and draft shield 3. If, for instance, draft shield 3 comprises at least one temperature sensor and a temperature control circuit is provided inside balance 2, further pairs of associated electric contact members may be provided for the transfer of signals between the at least one temperature sensor and the temperature control circuit. Further, if draft shield 3 comprises at least one temperature sensor and a temperature control circuit, lead wires 53 may advantageously connect to the thermoelectric module via the temperature control circuit. Each pair 55 and 56 of electric contact members is provided and configured to make electric contact between the respective electric contact members 551, 552 and 561, 562 when draft shield 3 is attached to balance 2 and to disconnect the respective electric contact members when draft shield 3 is detached from balance 2. In one non-limiting exemplary embodiment, at least one electric contact member of a pair 55, 56 of electric contact members may be a spring-loaded electric contact member. In other non-limiting exemplary embodiments, one electric contact member out of a pair 55, 56 of electric contact members may be a plug, while the other electric contact member of said pair of electric contact members is a corresponding counterpart socket. It goes without saying, that the ability to make electric contact between the respective electric contact members 551, 552 and 561, 562 when draft shield 3 is attached to balance 2 requires a matching arrangement of electric contact members 551 and 561 at draft shield 3 and 552 and 562 balance 2. Further, if a plug-and-socket connection between counterpart electric contact members is provided, the mating direction of the plug-and-socket connection needs to be adapted for the intended purpose.

While the subject matter of the disclosure has been explained by means of exemplary embodiments, it is understood that these are in no way intended to limit the scope of the claimed invention. It will be appreciated that the claims cover embodiments not explicitly shown or disclosed herein, and embodiments deviating from those disclosed in the exemplary modes of carrying out the teaching of the present disclosure will still be covered by the claims.

### Reference signs list

- 1: Weighing system
- 2: Balance
- 3: Draft shield
- 11: Weighing chamber
- 21: Housing of balance
- 22: Operator control panel
- 23: Weighing pan
- 31: Front wall of draft shield
- 32: Top wall of draft shield
- 33: Back wall of draft shield
- 34: Side door of draft shield
- 37: Heat transmission member
- 38: Side door of draft shield
- 39: Power supply and signal transmission terminals of balance
- 41: Heat dissipator
- 51: Thermoelectric module, Peltier module
- 52: Distance body
- 53: Lead wires
- 54: Lead wires
- 55: Pair of matching associated electric contact members
- 56: Pair of matching associated electric contact members
- 351: Upper guideway for door
- 352: Lower guideway for door
- 361: Upper guideway for door
- 371: First plate-shaped section of heat transmission member
- 372: Second plate-shaped section of heat transmission member
- 373: Through opening through first plate-shaped section of heat transmission member
- 374: Through opening through first plate-shaped section of heat transmission member
- 375: Through opening through first plate-shaped section of heat transmission member
- 411: Rib of heat dissipator
- 412: Rib of heat dissipator
- 413: Rib of heat dissipator
- 414: Rib of heat dissipator
- 415: Rib of heat dissipator
- 416: Rib of heat dissipator
- 417: Rib of heat dissipator
- 551: Electric contact member
- 552: Electric contact member
- 561: Electric contact member
- 562: Electric contact member

## Claims

1. A draft shield (3) for a balance (2), the draft shield comprising a housing having a top side, a bottom side and a back side, the draft shield (3) further comprising a heat transmission member (37), the heat transmission member comprising at least a first plate-shaped section (371) extending along and adjacent to the bottom side of the housing, the draft shield further comprising a heat dissipator (41) arranged outside the housing and a means (51) for driving a heat flux from a member having a relatively lower temperature to a member having a relatively higher temperature in functional relationship with the heat transmission member (37) and the heat dissipator (41).

2. A draft shield according to claim 1, wherein the heat transmission member (37) comprises a second plate-shaped section (372) extending from the first plate-shaped section (371) of the heat transmission member (37) and extending along the back side of the draft shield and extending from the first plate-shaped section (371) of the heat transmission member (37).

3. The draft shield according to the preceding claim, wherein the first plate-shaped section (371) of the heat transmission member (37) comprises at least one through opening (373, 375, 375).

4. The draft shield according to any preceding claim, wherein the means (51) for driving a heat flux from a member having a relatively lower temperature to a member having a relatively higher temperature is a thermoelectric module, in particular a Peltier module.

5. The draft shield according to any preceding claim, wherein the heat dissipator (41) comprises a plurality of ribs.

6. The draft shield according to the preceding claim, wherein the plurality of ribs comprises a plurality of vertically extending ribs (411, 412, 413, 414, 415, 416, 417).

7. The draft shield according to any preceding claim, wherein the draft shield is a separate device and in particular is separate from a balance.

8. The draft shield according to any preceding claim, wherein the draft shield comprises at least one electric contact member (551, 561) which is accessible from outside.

9. The draft shield according to the preceding claim, wherein the at least one electric contact member (551, 561) is adapted and configured to be selectively connected to and disconnected from a matching counterpart electric contact member (552, 562).

10. The draft shield according to any of the two preceding claims, wherein at least one of the at least one electric contact member (551, 561) is functionally connected to electric terminals of the means (51) for driving a heat flux from a member having a relatively lower temperature to a member having a relatively higher temperature so as to be configured to provide power to the means for driving a heat flux from a member having a relatively lower temperature to a member having a relatively higher temperature through the at least one electric contact member (551, 561).

11. The draft shield according to any preceding claim, further comprising at least one temperature sensor inside the housing of the draft shield (3).

12. The draft shield according to the preceding claim, wherein the draft shield (3) comprises a temperature control circuit in functional connection with at least one of the at least one temperature sensor and the means (51) for driving a heat flux from a member having a relatively lower temperature to a member having a relatively higher temperature.

13. The draft shield according to any of the two preceding claims when dependent upon any of claims 8 through 10, wherein at least one of the at least one temperature sensor is connected to at least one of the at least one electric contact member (551, 561).

14. A weighing system (1) comprising a balance (2) and a draft shield (3) according to any of the preceding claims, wherein the draft shield is separate from the balance and is adapted and configured to be selectively attached to and detached and removed from the balance, whereby, when the draft shield is attached to the balance, the draft shield encloses a weighing chamber (11) including a weighing pan (23) of the balance.

15. The weighing system according to the preceding claim, wherein the draft shield (3) is a draft shield comprising the features of any of claims 8 through 10, wherein the balance (2) comprises an electric connection terminal which is adapted and configured to make electric contact with at least one of the at least one electric contact member (551, 561) of the draft shield and further adapted and configured for providing power supply for the means (51) for driving a heat flux from a member having a relatively lower temperature to a member having a relatively higher temperature and/or for transferring at least one measurement signal and/or at least one control signal between the balance (2) and the draft shield (3).
